**Europäisches Patentamt**

**European Patent Office**

**Office européen des brevets**

(11) Veröffentlichungsnummer: **0 039 432**
A1

## (12) EUROPÄISCHE PATENTANMELDUNG

(21) Anmeldenummer: 81102895.0

(22) Anmeldetag: 15.04.81

(51) Int. Cl.³: **C 03 B 37/08,** C 03 B 37/09, C 03 B 7/06

(30) Priorität: 07.05.80 DE 3017374

(43) Veröffentlichungstag der Anmeldung: 11.11.81 **Patentblatt 81/45**

(84) Benannte Vertragsstaaten: **BE FR GB IT**

(71) Anmelder: **Demaschquié, Osama, Stettiner Strasse 19, D-6203 Hochheim/Main (DE)**

(72) Erfinder: **Demaschquié, Osama, Stettiner Strasse 19, D-6203 Hochheim/Main (DE)**

(74) Vertreter: **Funck-Hartherz, Anna-Eleonore, Dipl.-Phys., Hoherodskopfstrasse 41, D-6000 Frankfurt (Main) 50 (DE)**

(54) **Vorrichtung zur Herstellung von Glasfasern.**

(57) Bei Vorrichtungen zur Herstellung von Glasfasern, insbesondere Glasfasern zur Bewehrung von Kunststoffen, mit einer beheizten Vorkammer (10) für das geschmolzene Glas von hohem spezifischen elektrischen Widerstand mit wenigstens einer Durchtrittsöffnung (20) zur beheizten Ziehdüse (21), sind zur Beheizung der Glasmasse in der Vorkammer (10) oberhalb der Glasmasse Brenner (50) vorgesehen, die mit bekannten Heizmaterialien gespeist werden und die Glasmasse auf die zur Faserherstellung notwendige Temperatur bringen.

Zur Verbesserung des ungünstigen Temperaturprofils der ausschließlich mit Brennern oberhalb der Glasmasse beheizten Vorkammern ist die Vorkammer (10) mit Elektroden (40), die mit einer elektrischen Stromquelle verbunden sind, durchsetzt. Die Elektroden (40) können horizontal oder vertikal und von einer bzw. mehreren Seiten in die Glasmasse eintauchen.

## Vorrichtung zur Herstellung von Glasfasern

Die Erfindung bezieht sich auf eine Vorrichtung zur Herstellung von Glasfasern, insbesondere Glasfasern nach DIN 1259 und 61853, zur Bewehrung von Kunststoffen mit einer beheizten Vorkammer, die gegen die Atmosphäre hin offen ist, für das geschmolzene Glas von hohem spezifischen elektrischen Widerstand mit wenigstens einer Durchtrittsöffnung zur beheizten Ziehdüse. Die Zusammensetzung der Glasmasse, für die die erfindungsgemäße Vorrichtung insbesondere gedacht ist, ist in der US-PS 2.571.074 angegeben.

Vorrichtungen zur Herstellung von Glasfasern, bei denen in der Vorkammer oberhalb der zuvor im Schmelzofen fließfähig gemachten Glasmasse Brenner vorgesehen sind, die mit bekannten Heizmaterialien gespeist werden und die die Glasmasse auf
die zur Faserherstellung an dem Speiser bzw. der Ziehdüse
notwendige Temperatur bringen, sind bekannt. Dieses mittels
vorgenannter Vorrichtung durchgeführte Verarbeitungsverfahren wird allgemein als Direktschmelzverfahren bezeichnet,
und die Ziehtemperatur der Glasmasse in der Vorkammer beläuft
sich dabei auf etwa 1200$^o$C. In der FR-PS 1.051.516, der
OS 23 46 963 und der OS 16 96 038 sind solche zum Stande der
Technik gehörende Vorrichtungen beschrieben.

Die vorgenannten Vorrichtungen haben den Nachteil, daß an
den Seitenwänden und dem Boden der Vorkammer sowie der von
der Vorkammer abgehenden Durchtrittsöffnung hohe Wärmeverluste auftreten, die ein ungünstiges Temperaturprofil durch
die Glasmasse in vertikaler Richtung erzeugen mit der Folge,
daß die Temperatur an der Oberfläche der Glasmasse in der
Vorkammer etwa um 150 bis 200$^o$C heißer sein muß als die erforderliche Ziehtemperatur an den sich an die Durchtrittsöffnungen anschließenden Düsen.

Zur Behebung dieses Nachteils sieht die Ausführung gemäß der
OS 15 96 552 eine Düsenwanne vor, die sich über eine schmale
Durchtrittsöffnung an die Vorkammer anschließt, sowie eine
extrem große Isolierung dieser Düsenwanne. Diese schmale
Durchtrittsöffnung soll Wärmeverluste der Vorkammer verhindern. Abgesehen von Dosierungsschwierigkeiten bei der Zuführung der Glasmasse von der Vorkammer zur Düsenwanne, die
praktisch nicht zu beherrschen sind, ist diese vorgenannte
Konstruktion sehr aufwendig und kostspielig.

Das ungünstige Temperaturprofil in den Vorkammern der bekannten Vorrichtungen wird noch dadurch verstärkt, daß die Glasmasse durch die in den Schmelzöfen verwendeten Chromoxydausmauerungssteinen grün gefärbt wird. Durch diese grüne Einfärbung der Glasmasse ist die Absorption der Infrarotstrahlung wesentlich höher als bei andersfarbigen oder farblosen Glasmassen, was zur Folge hat, daß bei den bekannten Vorrichtungen die Temperatur der grüngefärbten Glasmasse am Boden der Vorkammer noch wesentlich geringer ist als bei andersgefärbten Massen. Dieser Umstand steigert den Temperaturabfall in der beheizten Vorkammer und fördert die Möglichkeit einer Kristallbildung in Eckbereichen der Vorkammer und der Durchtrittsöffnung, wie in der US-PS 3.265.478 beschrieben ist.

Bei den üblichen Vorrichtungen zur Glasfaserherstellung, wie sie in der DAS 1 796 172 und der FR-PS 1.265.650 dargelegt sind, wird die Vorkammer mit einer Glasmasse-Säule von 200 bis 250 mm über der Ziehdüse betrieben. Um an der Ziehdüse eine brauchbare Arbeitstemperatur von 1200°C zu erhalten, muß die Oberfläche der Glasmasse in der Vorkammer mit den bereits erwähnten Brennern auf mindestens 1350°C erhitzt werden. Wird die Glasmasse-Säule und damit der statische Druck auf über 250 mm angehoben, ist die Verarbeitung der Glasmasse an der bzw. den Ziehdüsen nicht mehr gewährleistet, da die Glastemperatur ein zu starkes Gefälle aufweist. Der relativ niedrige Stand der Glasmasse über der Ziehdüse bewirkt jedoch andererseits bei den bekannten Vorrichtungen einen negativen Einfluß auf die Effizienz und zwar infolge des niedrigen statischen Druckes. Ein weiterer als Nachteil der bekannten Vorrichtungen zu wertender Umstand ist die er-

forderliche Temperatur von 1350°C über der Glasmasse in der
Vorkammer, die die Verdampfung einiger Glasmasse-Bestandteile hervorruft, da diese teilweise aus flüchtigen Bestandteilen, wie Borsäure, Soda und Fluor, bestehen. Darüber hinaus
bewirkt die Verdampfung an der Oberfläche der Glasmasse häufig
eine Veränderung der Homogenität, was wiederum zu Schwierigkeiten bei der Produktion von Glasfasern im Endlosziehverfahren führt.

Zur Auskleidung von Vorkammern wird als feuerfestes Material
dichtes Zirkonsilikatmaterial verwendet. Dieses Material ist
insofern vorteilhaft, als es ohne unangenehme Begleiterscheinungen für die Glasfaserherstellung korrodiert, jedoch ist
zu beachten, daß die Korrosion des Zirkonsilikatmaterials um
so schneller fortschreitet, je höher die Temperatur in der
Vorkammer oberhalb der Glasmasse ist. Die Lebenserwartung
einer Vorkammer wird infolgedessen bei den bekannten Vorrichtungen verringert.

Die Erfindung hat sich zur Aufgabe gemacht, die erwähnten
Nachteile bei Vorrichtungen zur Herstellung von Glasfasern
der vorgenannten Art zu beseitigen. Zur Lösung dieser Aufgabe
geht die Erfindung von einer Vorrichtung zur Glasfaserherstellung mit einer beheizten Vorkammer für das geschmolzene
Glas, die gegen die Atmosphäre hin offen ist, von hohem
spezifischen elektrischen Widerstand mit wenigstens einer
Durchtrittsöffnung zur beheizten Ziehdüse aus, wobei erfindungsgemäß die Vorkammer mit Elektroden, die mit einer elektrischen Stromquelle verbunden sind, durchsetzt ist. Die zur
Atmosphäre hin offene Vorkammer kann ausschließlich oder zusätzlich von den Elektroden beheizt sein. Die vorgenannten
Elektroden können horizontal angeordnet sein, wobei diese
von einer Seite und/oder von beiden Seiten sowie versetzt
zueinander in die im Inneren der Vorkammer befindliche Glasmasse, von hohem spezifischen elektrischen Widerstand, eintauchen.

Es besteht aber auch die Möglichkeit, die Elektroden vertikal von oben anzuordnen und somit senkrecht in die Glasmasse
eintauchen zu lassen. Diese Elektroden sind in Bezug auf die
Ziehdüsen so angeordnet, daß die in den Ziehdüsen befindliche Glasmasse individuell erwärmt werden kann. Die Anordnung
der Elektroden kann dabei so getroffen sein, daß wenigstens
je eine Elektrode an den Schmalseiten der Durchtrittsöffnung
vorgesehen ist, die im Querschnitt die Form eines rechtwinkligen Parallelogrammes aufweisen.

Die Elektroden sind somit in Bezug auf die Ziehdüsen so angeordnet, daß die in den elektrisch beheizten Ziehdüsen befindliche Glasmasse individuell in ihrer Temperatur beeinflußt werden kann, was sich auf die Temperaturhomogenität der
Glasmasse an der Ziehdüse auswirkt.

Mit der Vorrichtung nach der Erfindung wird es möglich, den
negativen Temperaturgradienten in vertikaler Richtung zu
vermeiden oder jedenfalls so gering zu halten, daß kein nachteiliger Einfluß auf die Glasfaserproduktion ausgeübt wird.

Durch die direkte elektrische Beheizung der geschmolzenen
Glasmasse von hohem spezifischen elektrischen Widerstand in unmittelbarer Nähe der Durchtrittsöffnung bzw. - öffnungen und Ziehdüsen können sich in den Eckbereichen keine Kristalle bilden, wodurch ein weiterer Nachteil der bekannten Anlagen vermieden wird.

Die Elektroden bestehen vorzugsweise aus Molybdän in einer Stärke von 5 bis 30 mm. Das Molybdän ist an einen Halter aus hitzebeständigem Material, vorzugsweise nichtrostendem Stahl, eingepaßt, vorzugsweise eingeschraubt. Zum Schutz vor Oxydation kann das Molybdän an den gefährdeten Bereichen der Elektroden mit einer Schutzhülle ausgestattet sein. Die Halter der Elektroden können je nach Einsatzort eine Wasserkühlung oder Rippenkühlkörper besitzen. Derartige Elektroden sind an sich bekannt.

Die Elektroden sind vorzugsweise in einem Abstand zwischen 100 bis 250 mm angeordnet, wobei der Abstand der Heizstäbe zueinander nicht gleich sein muß, vielmehr konnen die Stäbe im Bereich der Durchtrittsöffnungen dichter nebeneinander angeordnet sein.

Ein weiterer Vorteil der erfindungsgemäßen Vorrichtung besteht darin, daß die Glasmasse über den ganzen Querschnitt der Vorkammer homogen beheizt wird, was praktisch eine Vergrößerung des nutzbaren Querschnittes der Kammer bedeutet.

Wie schon gesagt, wird die Bildung eines Temperaturgradienten von der Vorkammer zu der jeweiligen Durchtrittsöffnung vermieden, so daß die Glasmasse zwischen 100 und 1000 mm über die Ziehdüse eingestellt werden kann. Auf diese Weise wird die Effektivität der Vorrichtung wesentlich vergrößert.

Einer der entscheidensten Vorteile der Erfindung besteht darin, daß die Temperatur über der Glasmasse so weit vermindert wird, daß sie etwa in Höhe der notwendigen Temperatur an der jeweiligen Ziehdüse liegt und damit der Verdampfung an der Oberfläche der Glasmasse wesentlich entgegengewirkt wird.

Ferner werden die Korrosionen an den Auskleidungssteinen der Vorkammer wesentlich, d.h. mindestens um 40 - 50 %, verringert, wodurch die Lebenserwartung der Vorkammern über die der bekannten Glasfaservorrichtungen hinaus erhöht wird, ohne daß es zu Produktionsstorungen kommt.

Zusammenfaßend läßt sich sagen, daß mit der erfindungsgemäßen Vorrichtung der Temperaturabfall in der Vorkammer praktisch ausgeschaltet wird, was zur Folge hat, daß die Temperatur in den Vorkammern von 1350°C auf ca. 1200°C vermindert werden kann und damit die Verdampfung an der Glasmassenoberfläche sowie die Korrosion an den Auskleidungssteinen herabgesetzt wird. Ferner wird der Energieverbrauch vermindert, sowie eine thermische und chemische Homogenität innerhalb der Glasmasse erreicht.

Zusätzlich ist noch zu erwähnen, daß die Vorrichtung gemäß der Erfindung in vorhandene nur mit Brennern der bekannten Art ausgerüsteten Vorkammern ohne Schwierigkeit nachträglich eingebaut werden kann. Diese Moglichkeit ist bei keiner der zum Stand der Technik gehörenden Ausführungen bekannt geworden.

Die erfindungsgemäße Vorrichtung erlaubt darüber hinaus erstmals eine Vergrößerung der Länge der Vorkammer um mindestens
das 2- bis 3-fache und der Breite um mehr als das Doppelte.

Ob eine zusätzliche Beheizung der Ziehdüsen bei der erfindungsgemäßen Vorrichtung erforderlich wird, ist von der jeweiligen Konstruktion der Ziehdüsen bzw. Speiser abhängig.

Weitere Einzelheiten der Erfindung sind der nachfolgenden
Beschreibung eines Ausführungsbeispieles anhand der beigegebenen Zeichnungen zu entnehmen. Dabei zeigt:

Fig.   I    einen Längsschnitt durch eine Vorrichtung
            gemäß der Erfindung;

Fig.   II   einen Querschnitt gemäß 1 - 1 der Fig. I,
            von oben gesehen  und

Fig.   III  einen Querschnitt gemäß 2 - 2 der Fig. I.

Die fließfähige geschmolzene Glasmasse wird von einem nicht
dargestellten Schmelzofen über einen ebenfalls nicht gezeigten Verbindungskanal in mehrere rechteckige Vorkammern geleitet, wovon eine dargestellt und mit dem Bezugszeichen 10 in
den Figuren I, II und III gekennzeichnet ist. Die Vorkammer
10 besteht aus Seitenwänden 11, 12, einem Deckel 13 und einer
hinteren Stirnseite 14, sowie einem Boden 15. Der Boden jeder Vorkammer 10 weist in Längsrichtung im Abstand voneinander angeordnete im Querschnitt in Form rechteckiger Parallelogramme ausgebildete Durchtrittsöffnungen 20 mit darunter befindlichen Ziehdüsen 21 auf. Diese Durchtrittsoffnungen sind in dem Boden der Vorkammer so eingelassen, daß die geschmolzene Glasmasse aus dem Innenkanal der Vorkammer 10 direkt einfließen kann. Jede Ziehdüse 21 ist mit Öffnungen 22 versehen, durch welche die Glasmasse hindurchtretend die Glasfasern 23 bildet. Mit dem Bezugszeichen 54 ist eine Isolierverkleidung der Vorkammer 10 bezeichnet. Die Glasmasse füllt den Innenkanal 30 der Vorkammer 10 nur im unteren Teil aus; die Oberfläche der Glasmasse ist mit dem Bezugszeichen 52 gezeichnet.

Gemäß der Erfindung erstrecken sich die Elektroden 40 in den Bereich des Innenkanals 30 hinein, in dem sich die geschmolzene Glasmasse mit hohem spezifischen elektrischen Widerstand befindet. Bei der dargestellten Ausführungsform durchsetzen die Elektroden 40 die Seitenwände 12 und greifen in die geschmolzene Glasmasse ein, die sich im Bereich des Innenkanals 30 der Vorkammer 10 befindet. Vorzugsweise werden die Elektroden durch die beiden Seitenwände geführt, jedoch ist es auch moglich, die Elektroden von einer Seite in die Vorkammer hineinragen zu lassen. Wesentlich ist, daß die Elektroden 40 stets so angeordnet sind, daß sie in die geschmolzene Glasmasse vollständig eintauchen. Für einen entsprechenden Glasfluß von dem Schmelzofen über den Verbindungskanal her in die Vorkammer ist entsprechend Sorge zu tragen.

Die zum Stand der Technik gehörenden Brenner der bekannten Einrichtung sind mit 50 bezeichnet, die Abzüge des Vorkammerraumes mit 53 und der Teil des Innenkanals über der Glasmasse
mit 51. Die herkömmlichen Brenner 50 befinden sich oberhalb
der Glasmasse, also im oberen unausgefüllten und mit der
Atmosphäre verbundenen Bereich 51 des Innenkanals 30. Bei der
erfindungsgemäßen Ausführung sind die Elektroden 40 zusätzlich zu den herkommlichen Brennern 50 vorgesehen, wie auch
in der Darstellung gezeigt, jedoch können sie auch ausschließlich die Beheizung der Glasmasse in der Vorkammer vornehmen.

Die Abstände 41 der Elektroden 40 sind so getroffen, daß eine
optimale Temperatur im Bereich der Durchtrittsöffnungen 20
erreicht wird und es weder zu Kristallisation in den Eckbereichen noch zu Verklebungen an der Ziehdüse 21 kommt.

Bei den zum Stand der Technik gehörenden elektrisch beheizten Ziehdüsen 21 mit Bodenflächen von bis zu 500 cm$^2$ wird
eine homogene Temperaturverteilung am Boden durch eine alleinige elektrische Heizung der Ziehdüse nicht erreicht.

Bevorzugt sind die Elektroden 40, wie in Fig. I gezeigt,
angeordnet, wobei durch die Steuerschaltung der Elektrodenheizung die an den Ziehdüsen befindliche Glasmasse in ihrer
Temperatur beeinflußt wird. Durch diese Maßnahme gelangt die
Glasmasse thermisch und chemisch homogenisiert an die Ziehdüsen 21, was bei der Fertigung von Glasfasern, insbesondere
der vorgenannten Art, von Bedeutung ist, da die Qualität dadurch wesentlich erhöht wird und der Produktionsablauf ungehindert erfolgen kann.

Die Elektroden 40 werden von einer nicht dargestellten Stromquelle, vorzugsweise einer Drei-Phasen-Wechselstromquelle,
gespeist, die die Leistung über einen Transformator und eine
Steuerschaltung gibt. Die Steuerschaltung kann so gewählt
sein, daß unterschiedliche Temperaturen zwischen den einzelnen Heizstrecken 41 erzeugt werden. Unter Heizstrecken wird
der Abstand zwischen zwei Elektroden in Längsrichtung verstanden. Derartige Schaltungen sind bekannt.

Wie schon dargelegt, wird die Effektivität der erfindungsgemäßen Einrichtung dadurch besonders erhöht, daß es mit dieser
erstmals möglich ist, die Säule des geschmolzenen Glases in
der Vorkammer bis zu 1000 mm zu erh hen, da ein Temparaturabfall in der Vorkammer nicht eintritt.

So können bei einer Ziehdüse 21 mit 800 Öffnungen 22 bei 14
Mikron Faserdurchmesser eine Produktionsrate von täglich
1.500 kg und mehr erwartet werden. Bei dem erst vor einigen
Jahren entwickelten Düsenziehverfahren, bei dem 6000 und mehr
Öffnungen 22 in jeder Ziehdüse vorgesehen sind, ist die erfindungsgemäße Einrichtung von besonderer Bedeutung.

Wie aus den Zeichnungen ersichtlich, ist es ohne weiteres
möglich, die Elektroden in auch bereits installierte Vorkammern nachträglich einzubauen, was bisher bei keinem der Vorschläge zur Verbesserung bekannter Vorkammern möglich war.

- Patentansprüche -

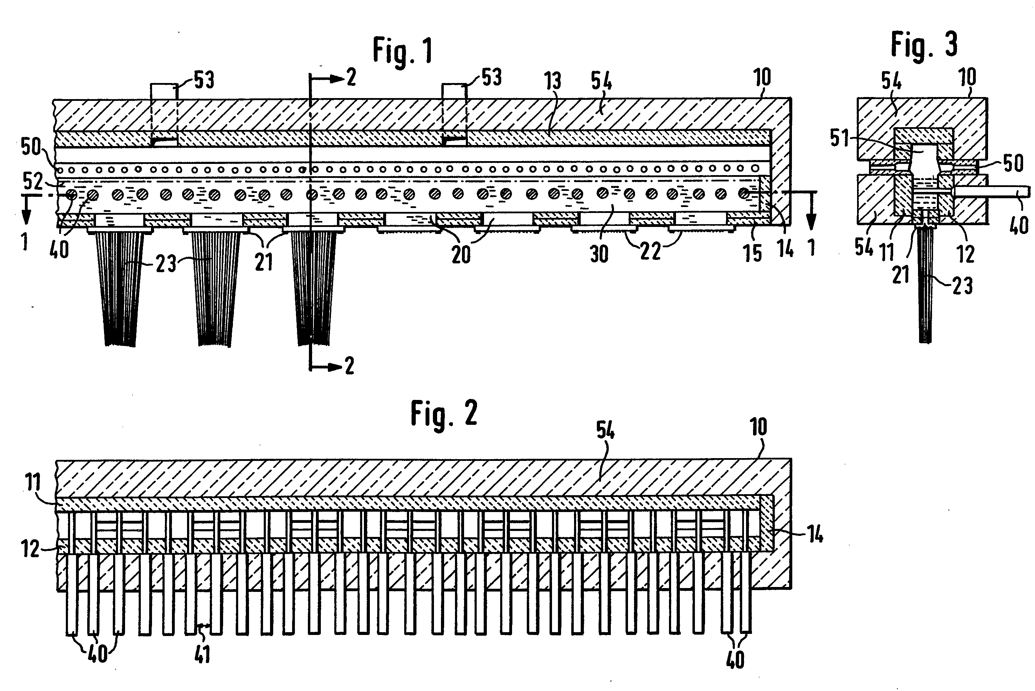

Patentansprüche

1.) Vorrichtung zur Herstellung von Glasfasern, insbesondere Glasfasern zur Bewehrung von Kunststoffen mit einer
beheizten Vorkammer für das geschmolzene Glas von hohem
spezifischen elektrischen Widerstand mit wenigstens einer
Durchtrittsöffnung zur beheizten Ziehdüse,
d a d u r c h  g e k e n n z e i c h n e t ,
daß die Vorkammer (10) mit Elektroden (40), die mit
einer elektrischen Stromquelle verbunden sind, durchsetzt ist.

2.) Vorrichtung nach Anspruch 1,
d a d u r c h  g e k e n n z e i c h n e t ,
daß die Elektroden (40) horizontal in die Glasmasse im
Innenkanal (30) der Vorkammer eintauchend die Vorkammerwand (12) seitlich durchsetzen.

3.) Vorrichtung nach Anspruch 2,
d a d u r c h  g e k e n n z e i c h n e t ,
daß die Elektroden (40) von beiden Seiten in die Vorkammer eingreifen und versetzt zueinander angeordnet sind.

4.) Vorrichtung nach Anspruch 1,
d a d u r c h  g e k e n n z e i c h n e t ,
daß die Elektroden (40) vertikal in die Glasmasse eintauchend angeordnet sind.

0039432

5.) Vorrichtung nach Anspruch 1,

d a d u r c h  g e k e n n z e i c h n e t,

daß die Elektroden (40) im Hinblick auf eine Temperaturbeeinflussung der Ziehdüsen (21) angeordnet sind.


6.) Vorrichtung nach Anspruch 5,

d a d u r c h  g e k e n n z e i c h n e t,

daß wenigstens je eine Elektrode (40) nächst den Schmalseiten der im Querschnitt in Form eines rechtwinkeligen
Parallelogrammes ausgebildeten Durchtrittsöffnungen (20)
vorgesehen ist.

# Fig. 1

# Fig. 3

1/1

# Fig. 2

0039432

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 350 309 (SOCIETE GENE-RALE POUR L'EMBALLAGE)<br>* Insgesamt *<br>& DE - A - 2 719 572<br><br>-- | 1,4 |
| E | EP - A - 0 024 463 (SOY)<br>* Insgesamt *<br><br>-- | 1,2 |
| E | WO - A - 80/01907 (OWENS-CORNING)<br>* Insgesamt *<br><br>-- | 1,2 |
| P | US - A - 4 247 733 (STEVENSON)<br>* Insgesamt * | 1,2 |
| E | & GB - A - 2 059 119 (15-04-1981)<br>& FR - A - 2 464 233 (06-03-1981)<br>& DE - A - 3 029 944 (26-03-1981)<br><br>-- | |
| P | US - A - 4 227 909 (HORNYAK)<br>* Insgesamt * | 1-3 |
| E | & BE - A - 883 709 (01-10-1980)<br>& GB - A - 2 053 890 (11-02-1981)<br>& FR - A - 2 458 515 (02-01-1981)<br>& DE - A - 3 022 091 (08-01-1981)<br>& NL - A - 80 02559 (16-12-1980)<br><br>-- | |
| A | DE - A - 1 596 578 (OWENS CORNING)<br><br>---- | |

**KLASSIFIKATION DER ANMELDUNG (Int. Cl.)**

C 03 B 37/08
37/09
7/06

**RECHERCHIERTE SACHGEBIETE (Int. Cl.)**

C 03 B 37/02
37/08
37/09
7/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-08-1981 | VAN DEN BOSSCHE |

EPA form 1503.1   06.78